# EUROPEAN PATENT SPECIFICATION

(11) **EP 3 569 889 B1**
(45) Date of publication and mention of the grant of the patent: **03.05.2023**
(21) Application number: 18465528.0
(22) Date of filing: 16.05.2018
(51) Int. Cl.: F16F 9/32, F16F 9/04, G01M 99/00, G01N 29/30

(54) **PLATFORM FOR TESTING A DISTANCE-MEASURING DEVICE UNDER AIR PRESSURE**
PLATTFORM ZUR PRÜFUNG EINER DISTANZMESSVORRICHTUNG UNTER LUFTDRUCK
PLATE-FORME POUR TESTER UN DISPOSITIF DE MESURE DE DISTANCE SOUS PRESSION D'AIR

(43) Date of publication of application: 20.11.2019
(73) Proprietor: Continental Automotive Technologies GmbH, 30165 Hannover (DE)
(72) Inventor: Draghici, Vasile-Daniel, 307285 Mosnita Noua (RO); Moisa, Victor Alexandru, 430111 Baia Mare (RO)
(74) Representative: Continental Corporation

(56) References cited:
- JP-A- 2001 246 918
- US-A- 3 289 463
- US-B2- 6 823 716

## Description

The present invention relates to the field of sensor testing. Particularly, the invention relates to a platform for testing a non-contact distance-measuring device under air pressure.

A distance-measuring device, such as an ultrasonic sensor, is usually applied in distance measurement scenarios such as parking assistance or liquid level measurement, in which the distance-measuring device or ultrasonic sensor may be operated at a pressure above atmospheric pressure. Beyond that, an UHPS (ultrasonic height pressure sensor) as a subtype of distance-measuring devices or ultrasonic sensors may be used as a built-in element in a truck air bellow as a distance or height sensing system for the suspension element of the truck. The UHPS in operation makes use of the non-contact ultrasonic measuring principle, by which the ultrasonic sensor transmits a sound wave and detects an echo reflected from a reflector surface.

An UHPS prototype may need to be tested, for instance by a test rig or test system originally designed for testing the air bellow. The test rig may require a cavity or an air bellow for mounting the UHPS, a reflector that bounces the measuring signal, and space that allows the ultrasonic wave to propagate inside the air bellow and any additional equipment to fit inside. The reflector may be arranged at the bottom of the air bellow or on the piston shoulder, in form of e.g. a buffer stop. By compressing or extending the air bellow, the air bellow moves towards or away from the UHPS and the distance between the UHPS and the reflector as well as the pressure inside the test rig are changed simultaneously. Therefore, it may be difficult for this test system or platform to conduct independent, precise or fine control over the distance and pressure.

A modified test rig may be configured to place an UHPS and a distance-controlling equipment or device for changing the distance between UHPS and the reflector inside an airtight air tank, in which the pressure can be changed independently from the distance change. An airtight interface to manipulate the distance-controlling equipment inside the air tank is thus required. However, purchasing qualified components and manufacturing such a modified test rig and its components may be time and cost consuming and the integration or homologation of the system for a safe use may be challenging.

Document JP 2001 246918 A describes a load measuring device and a pressure measuring device of air suspension for vehicle. An air-spring part of the air suspension comprises an air chamber, an ultrasonic transceiver and a target. The target reflects ultrasonic wave transmitted from the transceiver.

It is an objective of the invention to provide an alternative platform for testing a non-contact distance-measuring device under air pressure.

The problem is solved by the subject matter according to the independent claim. The dependent claims, the following description and the drawings show embodiments of the invention.

According to the invention, a platform for testing a non-contact distance-measuring device under air pressure is provided. The platform comprises a test chamber, a non-contact distance-measuring device that is configured to transmit a measuring signal to a reflector and receive a reflected signal, a distance-controlling reflection device and an air supply device. The test chamber, for instance in form of an air bellow and integrated as a suspension element in a truck, may comprise enough internal space to allow distance change of the reflector relative to a signal transmitter, e.g. an ultrasonic sensor or an UHPS, and the propagation of the measuring signal in between. Furthermore, the test chamber is designed to withstand high pressure above atmospheric pressure, which means, the test chamber is airtight at above-atmospheric pressure.

The distance-controlling reflection device with the reflector is configured to control the distance between the reflector and the non-contact distance-measuring device and to reflect the transmitted measuring signal of the non-contact distance-measuring device. Compared to a reflector of the above mentioned test rig in use, which reflector is arranged on a piston shoulder outside the air bellow, the reflector of the platform is arranged inside the test chamber and configured to control the distance between the reflector and the non-contact distance-measuring device. The distance varies by moving the reflector inside the chamber either towards or away from the ultrasonic sensor under precise and fine control. However, the distance change of the reflector does not influence or cannot be influenced by the pressure change inside the test chamber.

The air supply device of the platform is configured to generate pressure above atmospheric pressure inside the test chamber, independently from the position of the reflector or the distance change between the reflector and the ultrasonic sensor. The air supply device of the platform may be an air exchange system, comprising an external air tank and connection components such as gas inlet or outlet or tubes, and only generates pressure partially in the area inside the test chamber. The pressure control is independent from the distance control and can also not be affected when the distance between the reflector and the ultrasonic sensor changes. The independent control over the distance or the pressure is advantageous, since each control may be configured to meet their precision requirement respectively. An additional pressure sensor, arranged to measure the pressure inside the test chamber, may assist in controlling the pressure.

According to a first embodiment, the non-contact distance-measuring device may be an ultrasonic sensor or an UHPS (ultrasonic height pressure sensor) as mentioned above. Generally, the ultrasonic sensor measures the distance between a signal transmitter and a reflector by using sound waves by sending out a sound wave at a specific frequency and listening for the signal that bounces back. The distance is determined by recording the elapsed time between the sound waves being generated and reflected. The UHPS is a special type of ultrasonic sensors, which is developed specifically to detect the distance or height of the suspension element of the air bellow, e.g. in the truck. As such, the reliability and the sensibility of the UHPS is of high relevance for the safety of the truck.

According to a second embodiment, the platform further comprises a multifunctional mounting unit, which is arranged on the top of the test chamber and configured to mount the non-contact distance-measuring device or the ultrasonic sensor, the distance-controlling reflection device and the air supply device. The multifunctional mounting unit further fulfils the function of sealing the test chamber when arranged on the top thereof, so that the test chamber under above atmospheric pressure keeps airtight. In order to achieve ideal sealing effect of the platform, the multifunctional mounting unit may comprise additional mounting components or materials such as flanges or O-rings to fit the forms of the devices respectively.

According to another embodiment, the test chamber of the platform is an air bellow, which is arranged as the suspension element in a truck. However, the shape and the form of the air bellow may be designed in a different shape for individual applications. Correspondently, the multifunctional mounting unit may be configured or modified to mount the air bellow of another shape airtightly.

According to another embodiment, the distance-controlling reflection device further comprises a metal rod and an electric cylinder configured to push or pull the metal rod. The distance-controlling reflection device is configured to transform controlled movement of the metal rod into the distance change between the reflector and the non-contact distance-measuring device.

The metal rod is a link element between the electric cylinder and the reflector. More specifically, the metal rod is configured to connect the electric cylinder at an end with an arrangement in which the electric cylinder can drive the metal rod to move along its long axis or major axis which is parallel to the path of the transmitted or/and reflected signal. In the embodiment with the air bellow for a truck, the long axis of the metal rod is configured parallel to the sidewalls of the air bellow. At the other end, the metal rod is configured to connect the reflector arranged with the long axis of the reflector perpendicular to the long axis of the metal rod. As such, the reflector may provide a large area that can reflect the measuring signal so that testing the distance-measuring device can be conducted with less complexity with adjustment. The reflector can move towards or away from the distance-measuring device along the path of the transmitted or/and reflected signal and parallelly to the long axis of the metal rod. In the embodiment with the air bellow for a truck, the long axis of the metal rod is configured parallel to the sidewalls of the air bellow.

Hence, the movement of the metal rod, driven by the electric cylinder, is transformed into a synchronised movement of the reflector along the path of the transmitted or/and reflected signal, resulting in distance change between the reflector and the distance-measuring device.

According to the invention, the platform for testing the non-distance-measuring device under air pressure further comprises a motor. According to an embodiment, the motor is configured to connect and drive the electric cylinder and further drive the movement of the metal rod and the reflector.

The motor is able to control the distance change between the reflector and the non-contact distance-measuring device with an accuracy of under 1 mm, which represents a significant improvement in precise and fine control over the distance compared to the distance control by moving the piston, on which the reflector is arranged, of the above-mentioned modified air bellow test rig. The motor may be e.g. a stepper motor, a DC motor or a pneumatic motor.

According to another embodiment, the multifunctional mounting unit may be designed in form of a plate, comprising cavities or openings which are machined to mount non-contact distance-measuring device, the distance-controlling reflection device, the air supply device, the air bellow and mounting components for sealing effect.

According to another embodiment, the platform further comprises a pressure sensor, configured to assist in controlling the pressure inside the test chamber. The pressure sensor, mounted to the multifunctional mounting unit, measures the pressure inside the test chamber as a reference to the air supply device, also mounted to the multifunctional mounting unit with an inlet or an outlet to allow air exchange due to a predefined pressure and two solenoid valves to inflate or deflate. The pressure sensor is arranged radially offset to the air supply device and the non-contact distance-measuring device, which means that the separate arrangement of the pressure sensor gives feedback of the actual pressure inside the test chamber additionally and independently, which assists in precisely and reliably controlling the pressure.

According to another embodiment, the platform further comprises a first seal element and a second seal element. The first seal element is arranged around the metal rod and directly under the electric cylinder or between the electric cylinder and the second seal element. It might also be integrated into the electric cylinder. The first seal element further fulfils the function of preventing the metal rod from any dirt in the environment and keeping the metal rod clean while moving. The second seal element is arranged also around the metal rod and between the first seal element and the multifunctional mounting unit. The both seal elements are of relevance for the airtight test chamber.

According to another embodiment, the platform further comprises a plastic piston or a lower plastic piston, which is arranged under the test chamber, to hold or support the test chamber or the air bellow.

The piston is arranged at the bottom of the platform. The piston of the platform is configured to support the air bellow when the air bellow is pressurised by the air supply device and inflates towards the plastic lower piston.

According to another embodiment, the distance between the non-contact distance-measuring device and the reflector of the distance-controlling reflection device is configured to be adjustable up to 460 mm. Hence, the test chamber is configured with enough internal space which allows the measuring signal to propagate from the non-contact distance measuring device and the reflector and vice versa.

According to another embodiment, the accuracy of the platform to control the distance between the distance-measuring device and the reflector may reach 0.1 mm.

According to another embodiment, the speed of the platform of changing the distance between the non-contact distance measuring devices and the reflector of the distance-controlling reflection device is up to 35 mm/s.

According to another embodiment, the platform is airtight up to a pressure of 8.5 bar, preferably even up to a pressure of 13 bar.

According to a second aspect, the use of a platform for testing the sensitivity of a non-contact distance-measuring device, e.g. an ultrasonic sensor or an UHPS, under air pressure is provided.

The ultrasonic sensor may be tested at the platform with precise control over the distance between the ultrasonic sensor and the reflector and independent air pressure control.

These and other aspects will be apparent from and elucidated with reference to the embodiments as per the drawing described hereinafter.

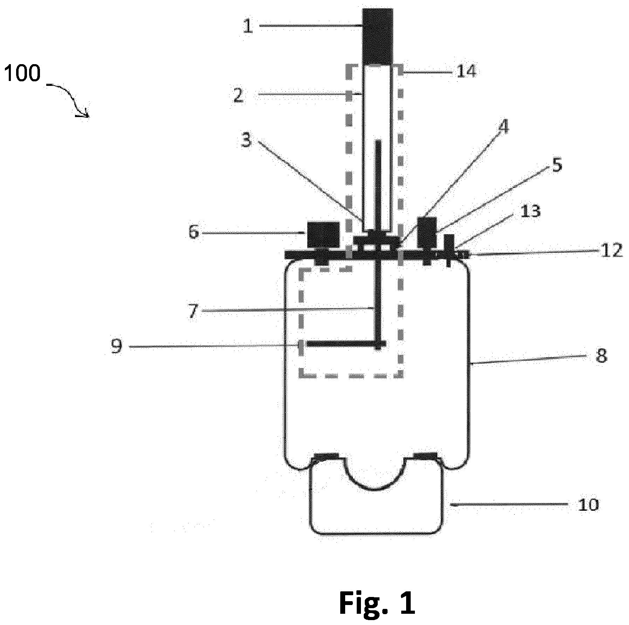

- Fig. 1: shows schematically a platform for testing a distance-measuring device under air pressure.

Fig. 1 shows schematically a platform 100 for testing a distance-measuring device under air pressure.

The platform 100 comprises a test chamber 8, a non-contact distance-measuring device 6, a distance-controlling reflection device 14 having a reflector, an air supply device 13 and a multifunctional mounting unit 12.

The test chamber 8 shown in Fig.1 is configured similar to an air bellow, which is integrated to or built in a truck as a suspension element.

On the top of the test chamber 8, the multifunctional mounting unit 12 is configured and machined to generate the sealed test chamber 8 and to mount the non-contact distance-measuring device 6, the air supply device 13 and additionally a second seal element 4 which is arranged to connect the distance-controlling reflection device 14. On the bottom of the test chamber, a plastic lower piston 10 is arranged to hold or support the test chamber 8 when the chamber 8 is inflated by means of the air supply device 13.

The non-contact distance-measuring device 6, mounted to the multifunctional mounting unit 12, is configured to transmit a measuring signal to a reflector 9 of the distance-controlling reflection device 14 and receive a reflected signal by the reflector 9.

The distance-controlling reflection device 14 comprises additionally to the reflector 9 a metal rod 7 and an electric cylinder, which is connected to and driven by a motor 1. The reflector 9, arranged inside the test chamber 8, is configured to move inside the test chamber 8 and change the distance between the reflector 9 and the non-contact distance-measuring device 6, controlled by the distance-controlling reflection device 14. The reflector 9 is configured with the long axis thereof perpendicularly aligned and attached to the metal rod 7 and thus arranged also perpendicular to the sidewalls of the test chamber 8. The metal rod 7 is further coupled to the electric cylinder 2. When the electric cylinder 2 is driven by the motor 1, the metal rod 7 is able to move along the long axis of the electric cylinder 2. As shown in Fig. 1, the movement of the metal rod 7 may also be parallel to the sidewalls of the test chamber 8.

Additionally, a first seal element 3, arranged around the metal rod 7 and between the electric cylinder 2 and the second seal element 4, is configured to keep the test chamber 8 airtight and the metal rod 7 clean while moving simultaneously.

The air supply device 13, also mounted to the multifunctional mounting unit 12, is configured to generate a pressure above atmospheric pressure inside the test chamber 8. The air pressure inside the test chamber 8 can thus be controlled independently from the position of the reflector 9 inside the test chamber 8. An additional pressure sensor 5 is mounted to the multifunctional mounting unit 12 and radially offset to the air supply device 13 as a reference sensor, which assists in controlling the pressure inside the test chamber 8.

For testing the distance-measuring device 6 or an ultrasonic senor under air pressure, the test chamber 8 of the platform 100 is pressurized with an above-atmospheric pressure, generated by the air supply device 13. Driven by the motor 1 and transformed by the electric cylinder 2 and the metal rod 7, the reflector 9 moves towards or away from the non-contact distance-measuring device 6, along a path parallel to the transmitted or/and reflected signal, to a predefined position. The non-contact distance-measuring device 6 transmits a signal towards the reflector 9, receives the reflected signal and determines the distance by using the recorded elapsed time in between. Furthermore, the reliability or the sensitivity of the non-contact distance-measuring device 6 may be assessed by repeatedly testing the distance-measuring device 6 with various reflector positions or pressure or environmental conditions under control.

## Claims

1. A platform (100) for testing a distance-measuring device under air pressure, the platform comprising:
a test chamber (8);
a non-contact distance-measuring device (6), configured to transmit a measuring signal to a reflector (9) and receive a reflected signal;
a distance-controlling reflection device (14), which comprises the reflector (9) and is configured to control the distance between the reflector (9) and the non-contact distance-measuring device (6) and to reflect the transmitted measuring signal of the non-contact distance-measuring device (6); and
an air supply device (13), configured to generate a pressure above atmospheric pressure inside the test chamber (8);
wherein the reflector (9) is arranged inside the test chamber (8);
wherein the air supply device (13) is configured to control the air pressure inside the test chamber (8), independently from the position of the reflector (9);
**characterised by**
a motor (1) configured to control the distance change between the reflector (9) and the non-contact distance-measuring device (6) with an accuracy of under 1 mm.

2. The platform (100) according to claim 1,
wherein the non-contact distance-measuring device (6) is an ultrasonic sensor or an ultrasonic height and pressure sensor, UHPS.

3. The platform (100) according to claim 1 or 2, further comprising:
a multifunctional mounting unit (12);
wherein the multifunctional mounting unit (12) arranged on the top of the test chamber (8) and configured to mount the non-contact distance-measuring device (6), the distance-controlling reflection device (14) and the air supply device (13).

4. The platform (100) according to one of the preceding claims,
wherein the test chamber (8) is an air bellow.

5. The platform (100) according to one of the preceding claims,
wherein the distance-controlling reflection device (14) further comprises a metal rod (7) and an electric cylinder (2), configured to push or pull the metal rod (7).

6. The platform (100) according to one of claims 3 to 5,
wherein the multifunctional mounting unit (12) is designed in form of a plate.

7. The platform (100) according to one of the preceding claims, further comprising:
a pressure sensor (5);
wherein the pressure sensor (5) is configured to assist in controlling the pressure inside the test chamber (8).

8. The platform (100) according to one of claims 5 to 7, further comprising:
a first seal element (3), arranged around the metal rod (7) and under the electric cylinder (2); and
a second seal element (4), arranged around the metal rod and between the first seal element (3) and the multifunctional mounting unit (12);
wherein a first seal element is configured to keep the metal rod (7) clean while moving.

9. The platform (100) according to one of the preceding claims, further comprising:
a plastic piston (10), arranged under the test chamber (8), to hold or support the test chamber (8).

10. The platform (100) according to one of the preceding claims,
wherein the distance between the non-contact distance-measuring device (6) and the reflector of the distance-controlling reflection device (14) is adjustable up to 460 mm.

11. The platform (100) according to one of the preceding claims,
wherein the accuracy of controlling the distance between the non-contact distance-measuring device (6) and the reflector of the distance-controlling reflection device (14) is up to 0.1 mm.

12. The platform (100) according to one of the preceding claims,
wherein the speed of changing the distance between the non-contact distance-measuring device (6) and the reflector of the distance-controlling reflection device (14) is up to 35 mm/s.

13. The platform (100) according to one of the preceding claims,
wherein the platform (100) is airtight up to a pressure of 8.5 bar, preferably even up to a pressure of 13 bar.

14. The use of a platform (100) according to one of the preceding claims for testing the sensitivity of an ultrasonic sensor under air pressure.

## Patentansprüche

1. Plattform (100) zum Prüfen einer Abstandsmessvorrichtung unter Luftdruck, wobei die Plattform Folgendes aufweist:
eine Prüfkammer (8);
eine berührungslose Abstandsmessvorrichtung (6), die dazu ausgebildet ist, ein Messsignal an einen Reflektor (9) zu übertragen und ein reflektiertes Signal zu empfangen;
eine abstandssteuernde Reflexionsvorrichtung (14), die den Reflektor (9) aufweist und dazu ausgebildet ist, den Abstand zwischen dem Reflektor (9) und der berührungslosen Abstandsmessvorrichtung (6) zu steuern und das übertragene Messsignal der berührungslosen Abstandsmessvorrichtung (6) zu reflektieren; und
eine Luftzufuhrvorrichtung (13), die dazu ausgebildet ist, einen Druck über atmosphärischem Druck in der Prüfkammer (8) zu erzeugen;
wobei der Reflektor (9) in der Prüfkammer (8) angeordnet ist;
wobei die Luftzufuhrvorrichtung (13) dazu ausgebildet ist, den Luftdruck in der Prüfkammer (8) unabhängig von der Position des Reflektors (9) zu steuern; **gekennzeichnet durch**
einen Motor (1), der dazu ausgebildet ist, die Abstandsänderung zwischen dem Reflektor (9) und der berührungslosen Abstandsmessvorrichtung (6) mit einer Genauigkeit unter 1 mm zu steuern.

2. Plattform (100) nach Anspruch 1,
wobei die berührungslose Abstandsmessvorrichtung (6) ein Ultraschallsensor oder ein Ultraschall-Höhen- und Drucksensor, UHPS, ist.

3. Plattform (100) nach Anspruch 1 oder 2, ferner aufweisend:
eine multifunktionale Montageeinheit (12);
wobei die multifunktionale Montageeinheit (12) an der Oberseite der Prüfkammer (8) angeordnet und dazu ausgebildet ist, die berührungslose Abstandsmessvorrichtung (6), die abstandssteuernde Reflexionsvorrichtung (14) und die Luftzufuhrvorrichtung (13) zu montieren.

4. Plattform (100) nach einem der vorhergehenden Ansprüche,
wobei die Prüfkammer (8) ein Luftbalg ist.

5. Plattform (100) nach einem der vorhergehenden Ansprüche,
wobei die abstandssteuernde Reflexionsvorrichtung (14) ferner einen Metallstab (7) und einen elektrischen Zylinder (2) aufweist, der dazu ausgebildet ist, den Metallstab (7) zu drücken oder zu ziehen.

6. Plattform (100) nach einem der Ansprüche 3 bis 5,
wobei die multifunktionale Montageeinheit (12) in Form einer Platte ausgestaltet ist.

7. Plattform (100) nach einem der vorhergehenden Ansprüche, ferner aufweisend:
einen Drucksensor (5);
wobei der Drucksensor (5) dazu ausgebildet ist, beim Steuern des Drucks in der Prüfkammer (8) zu unterstützen.

8. Plattform (100) nach einem der Ansprüche 5 bis 7, ferner aufweisend:
ein erstes Dichtungselement (3), das um den Metallstab (7) und unter dem elektrischen Zylinder (2) angeordnet ist; und
ein zweites Dichtungselement (4), das um den Metallstab und zwischen dem ersten Dichtungselement (3) und der multifunktionalen Montageeinheit (12) angeordnet ist;
wobei ein erstes Dichtungselement dazu ausgebildet ist, den Metallstab (7) während einer Bewegung sauber zu halten.

9. Plattform (100) nach einem der vorhergehenden Ansprüche, ferner aufweisend:
einen Kunststoffkolben (10), der unter der Prüfkammer (8) angeordnet ist, um die Prüfkammer (8) zu halten oder zu stützen.

10. Plattform (100) nach einem der vorhergehenden Ansprüche,
wobei der Abstand zwischen der berührungslosen Abstandsmessvorrichtung (6) und dem Reflektor der abstandssteuernden Reflexionsvorrichtung (14) bis zu 460 mm einstellbar ist.

11. Plattform (100) nach einem der vorhergehenden Ansprüche,
wobei die Genauigkeit eines Steuerns des Abstands zwischen der berührungslosen Abstandsmessvorrichtung (6) und dem Reflektor der abstandssteuernden Reflexionsvorrichtung (14) bis zu 0,1 mm beträgt.

12. Plattform (100) nach einem der vorhergehenden Ansprüche,
wobei die Geschwindigkeit eines Änderns des Abstands zwischen der berührungslosen Abstandsmessvorrichtung (6) und dem Reflektor der abstandssteuernden Reflexionsvorrichtung (14) bis zu 35 mm/s beträgt.

13. Plattform (100) nach einem der vorhergehenden Ansprüche,
wobei die Plattform (100) bis zu einem Druck von 8,5 bar, vorzugsweise sogar bis zu einem Druck von 13 bar, luftdicht ist.

14. Verwendung einer Plattform (100) nach einem der vorhergehenden Ansprüche zum Prüfen der Empfindlichkeit eines Ultraschallsensors unter Luftdruck.

## Revendications

1. Plate-forme (100) destinée à tester un dispositif de mesure de distance sous pression d'air, la plate-forme comprenant :
une chambre de test (8) ;
un dispositif de mesure de distance sans contact (6), configuré pour transmettre un signal de mesure à un réflecteur (9) et recevoir un signal réfléchi ;
un dispositif de réflexion de contrôle de distance (14), qui comprend le réflecteur (9) et est configuré pour contrôler la distance entre le réflecteur (9) et le dispositif de mesure de distance sans contact (6) et pour réfléchir le signal de mesure transmis du dispositif de mesure de distance sans contact (6) ; et
un dispositif d'alimentation en air (13), conçu pour générer une pression supérieure à la pression atmosphérique à l'intérieur de la chambre de test (8) ;
dans laquelle le réflecteur (9) est disposé à l'intérieur de la chambre de test (8) ;
dans laquelle le dispositif d'alimentation en air (13) est conçu pour contrôler la pression d'air à l'intérieur de la chambre de test (8), indépendamment de la position du réflecteur (9) ;
**caractérisée par** un moteur (1) conçu pour contrôler le changement de distance entre le réflecteur (9) et le dispositif de mesure de distance sans contact (6) selon une précision inférieure à 1 mm.

2. Plate-forme (100) selon la revendication 1,
dans laquelle le dispositif de mesure de distance sans contact (6) est un capteur à ultrasons ou un capteur de hauteur et de pression à ultrasons, UHPS.

3. Plate-forme (100) selon la revendication 1 ou 2, comprenant en outre :
une unité de montage multifonctionnelle (12) ;
dans laquelle l'unité de montage multifonctionnelle (12) est disposée au sommet de la chambre de test (8) et conçue pour le montage du dispositif de mesure de distance sans contact (6), du dispositif de réflexion de contrôle de distance (14) et du dispositif d'alimentation en air (13).

4. Plate-forme (100) selon l'une quelconque des revendications précédentes,
dans laquelle la chambre de test (8) est un soufflet pneumatique.

5. Plate-forme (100) selon l'une quelconque des revendications précédentes,
dans laquelle le dispositif de réflexion de contrôle de distance (14) comprend en outre une tige métallique (7) et un vérin électrique (2), conçu pour pousser ou tirer la tige métallique (7).

6. Plate-forme (100) selon l'une quelconque des revendications 3 à 5,
dans laquelle l'unité de montage multifonctionnelle (12) est conçue sous la forme d'une plaque.

7. Plate-forme (100) selon l'une quelconque des revendications précédentes, comprenant en outre :
un capteur de pression (5) ;
dans laquelle le capteur de pression (5) est configuré pour aider au contrôle de la pression à l'intérieur de la chambre de test (8).

8. Plate-forme (100) selon l'une quelconque des revendications 5 à 7, comprenant en outre :
un premier élément de scellement (3), disposé autour de la tige métallique (7) et
sous le vérin électrique (2) ; et
un second élément de scellement (4), disposé autour de la tige métallique et entre le premier élément de scellement (3) et l'unité de montage multifonctionnelle (12) ;
dans laquelle un premier élément de scellement est conçu pour maintenir la tige métallique (7) propre pendant son déplacement.

9. Plate-forme (100) selon l'une quelconque des revendications précédentes, comprenant en outre :
un piston en plastique (10), disposé sous la chambre de test (8), pour retenir ou supporter la chambre de test (8).

10. Plate-forme (100) selon l'une quelconque des revendications précédentes,
dans laquelle la distance entre le dispositif de mesure de distance sans contact (6) et le réflecteur du dispositif de réflexion de contrôle de distance (14) peut être réglée jusqu'à 460 mm.

11. Plate-forme (100) selon l'une quelconque des revendications précédentes,
dans laquelle la précision du contrôle de la distance entre le dispositif de mesure de distance sans contact (6) et le réflecteur du dispositif de réflexion de contrôle de distance (14) va jusqu'à 0,1 mm.

12. Plate-forme (100) selon l'une quelconque des revendications précédentes, dans laquelle la vitesse de changement de la distance entre le dispositif de mesure de distance sans contact (6) et le réflecteur du dispositif de réflexion de contrôle de distance (14) va jusqu'à 35 mm/s.

13. Plate-forme (100) selon l'une quelconque des revendications précédentes, dans laquelle la plate-forme (100) est étanche à l'air jusqu'à une pression de 8,5 bar, de préférence même jusqu'à une pression de 13 bar.

14. Utilisation d'une plate-forme (100) selon l'une quelconque des revendications précédentes pour tester la sensibilité d'un capteur à ultrasons sous pression d'air.
